# EUROPEAN PATENT APPLICATION

(11) **EP 4 489 155 A1**
(43) Date of publication of application: **08.01.2025**
(21) Application number: 23763741.8
(22) Date of filing: 03.03.2023
(51) Int. Cl.: H01M 10/04, H01M 50/466

(54) **ELECTRODE ASSEMBLY SEALING DEVICE AND SEALING METHOD**

(30) Priority: 03.03.2022 KR 20220027739; 02.03.2023 KR 20230028024
(71) Applicant: LG Energy Solution, Ltd., Seoul 07335 (KR)
(72) Inventor: HWANG, Hae Ho, Daejeon 34122 (KR)
(74) Representative: Goddar, Heinz J.
(86) International application number: PCT/KR2023/002946
(87) International publication number: WO 2023/167543

(57) **Abstract**

An apparatus for sealing an electrode assembly according to an embodiment may include a pressing part including a pressing surface parallel to a cut corner of an electrode plate to apply a pressure to a plurality of separators and a moving part allowing the pressing part to move toward the electrode assembly. According to this configuration and structure, the apparatus for sealing the electrode assembly according to an embodiment may minimize bending and cracking of an electrode, which occur during the sealing process and may improve process accuracy by more accurately performing the sealing process.

## Description

### TECHNICAL FIELD

The present application claims the benefit of the priority of Korean Patent Application Nos. 10-2022-0027739, filed on March 03, 2022, and 10-2023-0028024, filed on March 02, 2023, which are hereby incorporated by reference in their entirety.

The present invention relates to an apparatus and method for sealing an electrode assembly, and more particularly, to an apparatus and method for sealing an electrode assembly, which seals a plurality of separators provided in an electrode assembly with each other.

### BACKGROUND ART

In general, secondary batteries include nickel-cadmium batteries, nickel-hydrogen batteries, lithium ion batteries, and lithium ion polymer batteries. Such a secondary battery is being applied to be used in small-sized products such as digital cameras, P-DVDs, MP3Ps, mobile phones, PDAs, portable game devices, power tools, E-bikes, and the like as well as large-sized products requiring high power such as electric vehicles and hybrid vehicles, power storage devices for storing surplus power or renewable energy, and backup power storage devices.

In general, in order to manufacture the secondary battery, first, electrode active material slurry is applied to a positive electrode collector and a negative electrode collector to manufacture a positive electrode and a negative electrode. Then, the electrodes are stacked on both sides of a separator to form an electrode assembly. Also, the electrode assembly is accommodated in a battery case, and then the battery case is sealed after an electrolyte is injected therein.

Such a secondary battery is classified into a pouch-type secondary battery and a can-type secondary battery according to a material of a case accommodating the electrode assembly. In the pouch-type secondary battery, an electrode assembly is accommodated in a pouch made of a flexible polymer material. Also, in the can-type secondary battery, an electrode assembly is accommodated in a case made of a metal or plastic material.

In a process of sealing an electrode inside the separator after stacking the electrode and the separator, a sealing apparatus that generates a high temperature and high pressure is used. The sealing apparatus applies a pressure and heat to the separator to seal the electrode inside the separator. Particularly, when the sealing apparatus seals each corner of the separator, an elaborate operation is required so as not to damage the electrode assembly. Specifically, during the corner sealing operation of the sealing apparatus, problems may occur in the process, such as bending and cracking of the electrode due to contact between the sealing apparatus and the electrode, or lifting of the separator by the sealing apparatus.

In order to prevent these problems, there is a need for a sealing apparatus and a sealing method, which are capable of preventing the problem of electrode damage and increasing process efficiency by sealing the separator more elaborately.

### DISCLOSURE OF THE INVENTION

### TECHNICAL PROBLEM

One object of the present invention for solving the above problem is to provide an apparatus and method for sealing an electrode assembly, which accurately seals a separator of the electrode assembly to prevent an electrode from being damaged and improve process efficiency.

### TECHNICAL SOLUTION

In an apparatus for sealing an electrode assembly according to an embodiment of the present invention, a plurality of separators may be sealed to each other in the electrode assembly in which a plurality of electrode plates and the plurality of separators are alternately stacked. The apparatus for sealing the electrode assembly may include a pressing part configured to apply a pressure to the plurality of separators, and a moving part configured to allow the pressing part to move toward the electrode assembly, wherein the pressing part may include a pressing surface that is parallel to a cut corner of each of the electrode plate.

The pressing surface of the pressing part may be angled at an angle of 25 degrees to 35 degrees in a full-length direction of the electrode assembly.

The pressing surface of the pressing part may be angled at an angle of 25 degrees to 35 degrees in a full-width direction of the electrode assembly.

The pressing part may be provided in plurality to be respectively disposed at a plurality of corners of the electrode assembly.

The moving part may allow the pressing part to move in a first direction parallel to a full-length direction of the electrode assembly and a second direction parallel to a full-width direction of the electrode assembly so as to press the plurality of separators.

The moving part may allow the pressing part to sequentially move in the first and second directions.

In a method for sealing an electrode assembly according to an embodiment of the present invention, a plurality of separators may be sealed to each other in the electrode assembly in which a plurality of electrode plates and the plurality of separators are alternately stacked. The method for sealing the electrode assembly may include a moving process of allowing a pressing part to move toward the electrode assembly and a sealing process of allowing the pressing part to press and heat the plurality of separators so as to seal the plurality of separators to each other in a state of being in contact with the electrode assembly, wherein the pressing part may include a pressing surface parallel to a cut corner of the electrode plate.

the pressing surface of the pressing part is angled at an angle of 25 degrees to 35 degrees in a full-length direction and in a full-width direction of the electrode assembly.

The pressing part may be provided in plurality to be respectively disposed at a plurality of corners of the electrode assembly.

In the moving process and/or sealing process, the pressing part may move in a first direction parallel to the full-length direction of the electrode assembly and a second direction parallel to the full-width direction of the electrode assembly.

### ADVANTAGEOUS EFFECTS

According to the preferred embodiment of the present invention, the pressing surface of the pressing part facing the electrode assembly may be designed to be parallel to the cut corner of the electrode plate, thereby minimizing the bending and cracking of the electrode, which occur during the sealing process.

According to the preferred embodiment of the present invention, the pressing part pressing the electrode assembly may two-dimensionally move by the moving part to perform the sealing process, and thus, the sealing process may be more accurately performed to improve the process accuracy.

In addition, the effects that are obvious to those skilled in the art may be predicted from the configurations according to the embodiment of the present invention.

### BRIEF DESCRIPTION OF THE DRAWINGS

The following drawings attached in this specification illustrate a preferred embodiment of the present invention and function to make further understood the technical spirit of the present invention along with the detailed description of the invention, and thus, the present invention should not be construed as being limited to only the drawings.
FIG. 1 is a plan view of an apparatus for sealing an electrode assembly according to an embodiment.
FIG. 2 is a cross-sectional view of the electrode assembly according to an embodiment.
FIG. 3 is an enlarged view illustrating a corner of the electrode assembly and a periphery of the corner according to an embodiment.
FIG. 4 is a top view of the electrode assembly and a pressing part according to an embodiment.
FIGS. 5 and 6 are schematic views illustrating movement of the pressing part according to an embodiment.
FIG. 7 is a flowchart illustrating a method for sealing an electrode assembly according to another embodiment.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

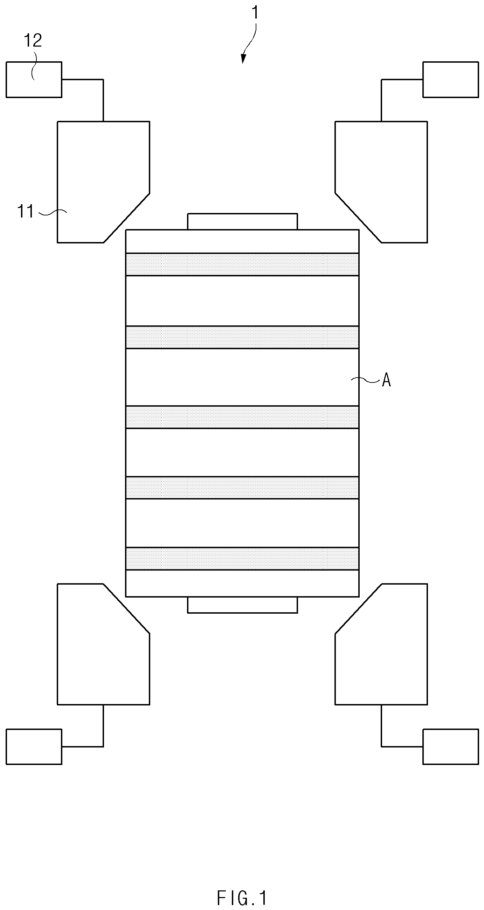

FIG. 1 is a plan view of an apparatus 1 for sealing an electrode assembly according to an embodiment.

Referring to FIG. 1, an apparatus 1 for sealing an electrode assembly (hereinafter, referred to as a 'sealing apparatus') may be disposed outside an electrode assembly A to seal the electrode assembly A. For example, the sealing apparatus 1 may be disposed at each corner of the electrode assembly A to seal each corner of the electrode assembly A by applying a pressure and heat to the electrode assembly A. Specifically, the sealing apparatus 1 may seal a separator S in a state, in which an electrode plate E is disposed inside the separator S, on the electrode assembly A constituted by the electrode plate E and the separator S to block the electrode plate from an external environment. After the corner sealing of the electrode assembly A, i.e., the corner sealing in which each corner of the electrode assembly A is sealed, main sealing in which each edge of the separator S is sealed may be performed.

Since the main sealing is sequentially performed after the corner sealing, it may be important to prevent the electrode plate E from being damaged, or prevent the separator S being lifted during the corner sealing process. The sealing apparatus 1 may seal the corner of the electrode assembly A to prevent such a problem and more smoothly proceeding to the main sealing.

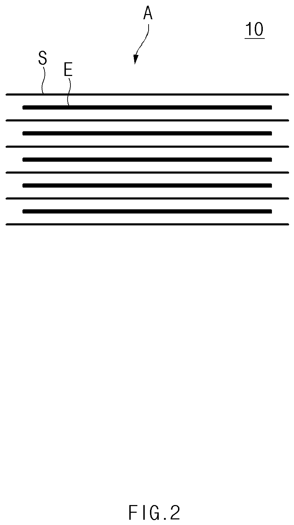

FIG. 2 is a schematic view of the electrode assembly A according to an embodiment.

Referring to FIG. 2, the electrode assembly A may include a plurality of electrode plates E and a plurality of separators S, which are alternately stacked. The plurality of electrode plates E may include a form in which positive electrode plates and negative electrode plates are alternately disposed. In this case, the separator S may be inserted between the positive electrode plate and the negative electrode plate. The electrode assembly A may be impregnated with an electrolyte. Ions may actively move between the positive and negative plates through the electrolyte, and contact between the positive and negative plates may be blocked through the separator S to secure stability of the electrode assembly A. The separator S may include a synthetic resin material such as polyethylene or polypropylene to secure physical strength without chemically reacting with the ions.

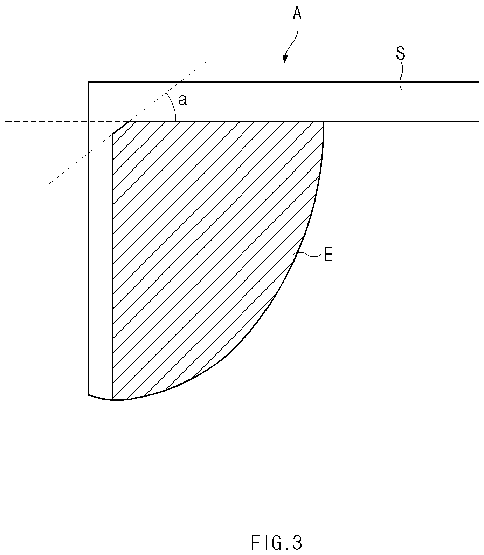

FIG. 3 is an enlarged view illustrating the corner of the electrode assembly and a periphery of the corner according to an embodiment.

Referring to FIG. 3, the corner of the electrode plate E may include a cut portion. Specifically, a portion of each corner of the electrode plate E may be cut at a predetermined angle based on a direction in which the electrode plate E and the separator S are stacked, i.e., when the sealing apparatus 1 and the electrode assembly A are viewed from an upper side. According to this structure, in the process of sealing the corner of the separator S, the damage of the electrode plate E due to penetration of the sealing apparatus 1 into the inside of the separator S may be reduced.

In FIG. 3, each corner of the electrode plate E may be cut at a predetermined angle a. For example, each corner of the electrode plate E may be cut at a predetermined angle a with respect to a front direction or a full-width direction of the electrode plate E. The predetermined angle a may be within a range of 25 degrees to 35 degrees. That is, the corner may be formed so that an inclined surface is formed at an angle of 25 degrees to 35 degrees with respect to the front or rear surface of the electrode plate E. Alternatively, the corner may be formed so that an inclined surface is formed at an angle of 25 degrees to 35 degrees with respect to a side surface of the electrode plate E.

The sealing apparatus 1 may include a pressing part 11 and a moving part 12.

The pressing part 11 may apply a pressure to the plurality of separators S. For example, a plurality of pressing parts 11 may be disposed at each corner of the separator S to apply a pressure to the plurality of separators S by being in contact with each corner of the separator S. Due to high-temperature heat by a heating part (not shown) described later and a high pressure of the pressing part 11, each corner of the separator S stacked with the electrode plate E may be sealed so that the electrode plate E is separated from the outside by the separator S.

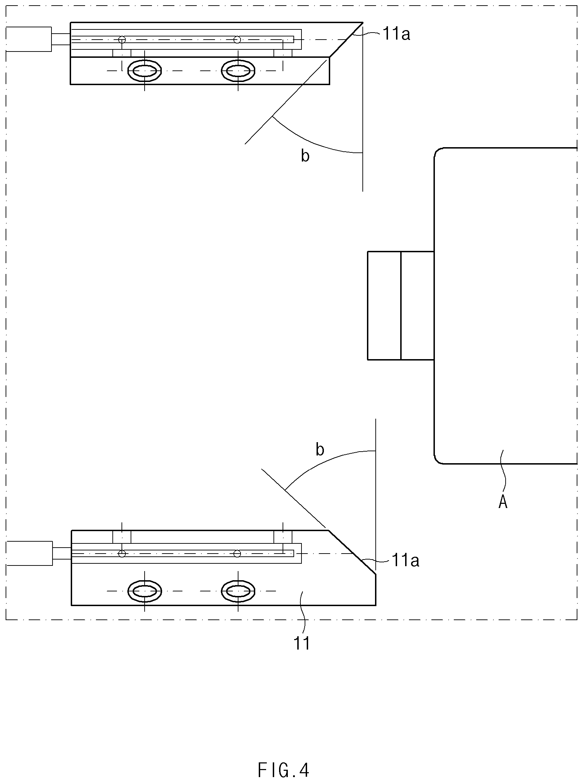

FIG. 4 is a top view of the electrode assembly A and the pressing part 11 according to an embodiment.

Referring to FIG. 4, the pressing part 11 may include a pressing surface 11a that is parallel to the cut corner of the electrode plate E. In other words, in the process, in which the pressing part 11 and the separator S are in contact with each other to apply a pressure, the pressing surface 11a, to which the pressing part 11 applies the pressure, and the surface of the cut corner of the electrode plate E, which faces the pressing surface 11a, may be parallel to each other. Specifically, the pressing surface 11a and the cut portion of the corner of the electrode plate E may face each other based on the direction in which the electrode plate E and the separator S are stacked, i.e., when the sealing apparatus 1 and the electrode assembly A are viewed from the upper side. In this case, the pressing surface 11a and the cut portion of the corner of the electrode plate E may be parallel to each other. More specifically, as illustrated in FIG. 4, the pressing surface 11a of the pressing part 11 may have a shape including an inclined surface at a predetermined angle b. The predetermined angle b of the inclined surface may be an angle with respect to a full-length direction or a full-width direction of the pressing surface 11a.

For example, the pressing surface 11a of the pressing part 11 may be angled at an angle of 25 degrees to 35 degrees with respect to the full-length direction of the electrode assembly A. In other words, the inclined angle of the pressing surface 11a of the pressing part 11 with respect to both side surfaces of the electrode assembly may be 25 degrees to 35 degrees.

Alternatively, the pressing surface 11a of the pressing part 11 may be angled at an angle of 25 degrees to 35 degrees with respect to the full-width direction of the electrode assembly A. In other words, the inclined angle of the pressing surface 11a of the pressing part 11 with respect to a front or rear surface of the electrode assembly A may be 25 degrees to 35 degrees.

In other words, the angle of the pressing surface may be designed differently according to a cut angle of the cut surface of the corner of the electrode plate E. That is, when the corner of the electrode plate E includes the cut surface of 30 degrees with respect to the full-width direction, the pressing surface may also include an inclined surface of 30 degrees with respect to the full-width direction of the pressing part 11.

Specifically, when the pressing surface 11a of the pressing part 11 is angled at an angle of less than 25 degrees with respect to the full-width direction of the electrode assembly A, the pressing surface 11a may be in contact with each corner of the electrode assembly A so as to be almost parallel to the front or rear surface of the electrode assembly A, and thus, a sealing angle of the electrode assembly A may be deteriorated. In addition, since the pressing surface 11a is formed so as not to correspond to the inclined surface of the corner of the electrode plate E, the electrode plate E may be worn or broken during the process of sealing each corner of the electrode assembly A.

In addition, when the pressing surface 11a of the pressing part 11 is angled at an angle of more than 35 degrees with respect to the full-width direction of the electrode assembly A, that is, the pressing surface 11a is angled at an angle of 35 degrees to 45 degrees with respect to the full-width direction of the electrode assembly A, since the pressing surface 11a is disposed to be excessively inclined with respect to the front or rear surface of the electrode assembly A, and the pressing surface 11a is formed so as not to correspond to the inclined surface of the corner of the electrode plate E, the electrode plate E may be worn or broken during the process of sealing each corner of the electrode assembly A.

Similarly, when the pressing surface 11a of the pressing part 11 is angled at an angle of less than 25 degrees with respect to the full-length direction of the electrode assembly A, the pressing surface 11a may be in contact with each corner of the electrode assembly A so as to be almost parallel to the side surface of the electrode assembly A, and thus, a sealing angle of the electrode assembly A may be deteriorated. In addition, since the pressing surface 11a is formed so as not to correspond to the inclined surface of the corner of the electrode plate E, the electrode plate E may be worn or broken during the process of sealing each corner of the electrode assembly A.

In addition, when the pressing surface 11a of the pressing part 11 is angled at an angle of more than 35 degrees with respect to the full-length direction of the electrode assembly A, that is, the pressing surface 11a is angled at an angle of 35 degrees to 45 degrees with respect to the full-length direction of the electrode assembly A, since the pressing surface 11a is disposed to be excessively inclined with respect to the side surface of the electrode assembly A, and the pressing surface 11a is formed so as not to correspond to the inclined surface of the corner of the electrode plate E, the electrode plate E may be worn or broken during the process of sealing each corner of the electrode assembly A.

In the process, in which the pressing part 11 presses the separator S, the pressing part 11 may also apply the pressure to the electrode plate E inside the separator S. According to this structure, the pressure applied to the electrode plate E by the pressing part 11 may be more reduced. In other words, since the pressing surface of the pressing part 11 and the cut surface of the corner of the electrode plate E are parallel to each other, a wider surface of the corner of the electrode plate E may undergo the pressure by the pressing surface. In this structure, the pressure of the pressing part 11 to the electrode plate E may be minimized.

As a result, since the pressure applied to the electrode plate E is minimized by the structure of the pressing part 11, the damage and abrasion of the electrode plate E, which occur during the sealing process may be reduced to produce a product having higher quality. Specifically, the bending and cracking of the electrode plate E due to the contact between the pressing part 11 and the electrode plate E may be more prevented to improve yield of a finished product.

The moving part 12 may allow the pressing part 11 to move toward the electrode assembly A. For example, the moving part 12 may be connected to the pressing part 11 to allow the pressing part 11 to move at various angles and position using a transport means such as a motor.

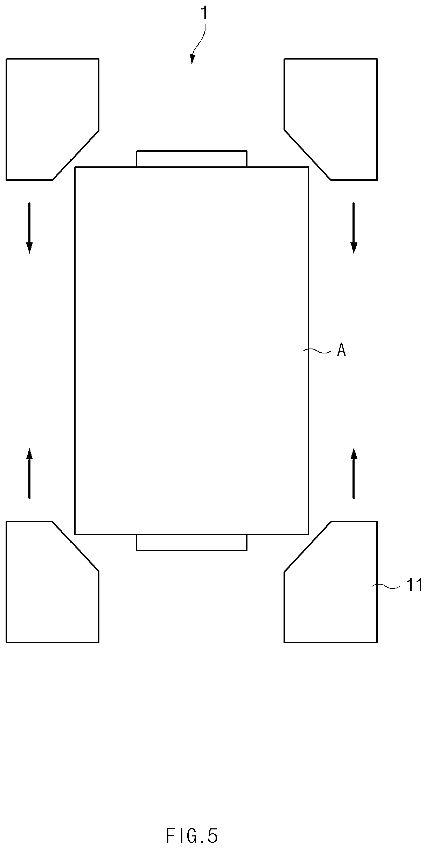

FIG. 5 is a schematic view illustrating movement of the pressing part 11 according to an embodiment.

Referring to FIG. 5, the moving part 12 may allow the pressing part 11 to move in a first direction parallel to the full-length direction of the electrode assembly A so that the pressing part 11 presses the plurality of separators S. In other words, the moving part 12 may allow the pressing part 11 to move toward the electrode assembly A in the same direction as a longitudinal direction of the electrode assembly A. That is, in FIG. 5, the moving part 12 may allow the pressing part 11 disposed at upper and lower sides of the electrode assembly A to move in downward and upward directions.

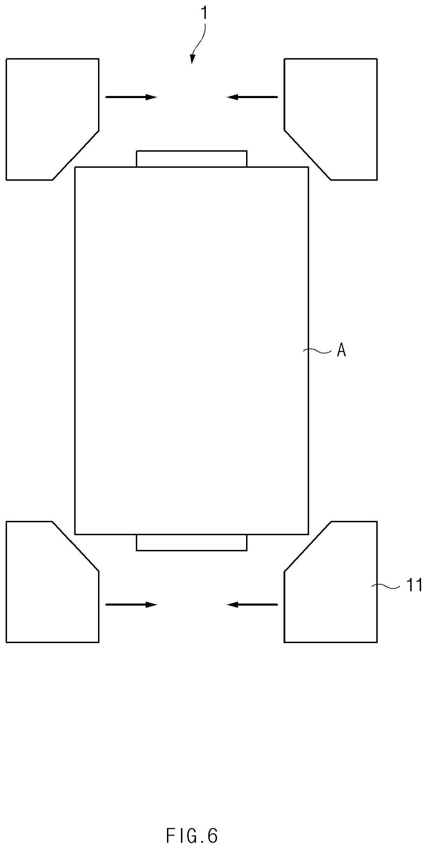

FIG. 6 is a schematic view illustrating movement of the pressing part 11 according to an embodiment.

Referring to FIG. 6, the moving part 12 may allow the pressing part 11 to move in a second direction parallel to the full-width direction of the electrode assembly A. In other words, the moving part 12 may allow the pressing part 11 to move toward the electrode assembly A in a direction perpendicular to the longitudinal direction of the electrode assembly A. That is, in FIG. 6, the moving part 12 may allow each of the pressing parts 11 disposed at both sides of the electrode assembly A to move toward the electrode assembly A.

In an order in which the moving part 12 allows the pressing part 11 to move, the moving part 12 may allow the pressing part 11 to sequentially move in the first direction and the second direction. That is, the moving part 12 may allow the pressing part 11 to initially move in the first direction and then sequentially move in the second direction. However, the moving order of the moving part 12 may not be limited to the above order and may allow the pressing part 11 to move in the first direction after allowing the pressing part 11 to move in the second direction. Alternatively, the moving part 12 may allow the pressing part 11 to simultaneously move in the first direction and the second direction, thereby realizing more effective movement and contact of the pressing part 11.

According to this operational principle, the sealing apparatus according to the related art may operate only in the first direction, which is the longitudinal direction of the electrode assembly to realize a mechanism in which the pressing part moves to the electrode assembly so that the pressure is applied. On the other hand, the sealing apparatus 1 according to an embodiment may more accurately perform the sealing process by the moving part 12. Specifically, the sealing apparatus according to the related art has a problem in that the pressing part operates only in one direction that is the longitudinal direction of the electrode assembly, and thus, the separator of the electrode assembly is widened, and a gap occurs. On the other hand, the apparatus 1 for sealing the electrode assembly according to an embodiment may allow the pressing part 11 to move in the second direction after moving in the first direction or moves in the first direction after moving in the second direction so that the pressing part moves depending on circumstances to more flexible and accurate sealing process. Therefore, the apparatus 1 for sealing the electrode assembly may prevent the problem such as the lifting and cracking of the separator S that occur during the sealing process from occurring.

As a result, since the apparatus 1 for sealing the electrode assembly allows the pressing part 11 to move in the first and second directions, the apparatus 1 for sealing the electrode assembly may improve the efficiency of the corner sealing process and the quality of the manufactured product.

The sealing apparatus 1 may further include a heating part (not shown). The heating part (not shown) may be connected to the pressing part 11 to apply heat to the electrode assembly A. For example, the heating part (not shown) may generate heat by including a heating means to transfer the heat generated through the physically connected pressing part 11 to the electrode assembly A. The electrode assembly A receiving high-temperature heat from the heating part (not shown) may be sealed through a thermal fusion process.

Hereinafter, a method 2 for sealing an electrode assembly is disclosed. Descriptions of concepts that are partially duplicated with the configuration described above will be omitted.

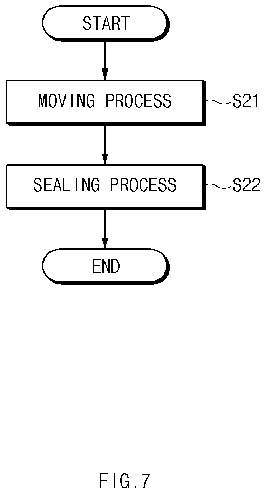

FIG. 7 is a flowchart illustrating a method for sealing an electrode assembly according to another embodiment.

Hereinafter, a method for sealing an electrode assembly will be described as another embodiment of the present invention.

Referring to FIG. 7, in the method for sealing the electrode assembly, the electrode assembly A constituted by an electrode plate E and a separator S may be sealed. Specifically, in the method for sealing the electrode assembly, the separator S may be sealed in a state in which the electrode plate E is disposed inside the separator S. In other words, each corner of the electrode assembly A, that is, each corner of the separator S may be sealed through the method 2 for sealing the electrode assembly, and the electrode assembly A having each corner sealed may be completely sealed because a main sealing process is performed also.

The method for sealing the electrode assembly may include a moving process (S21) and a sealing process (S22).

In the moving process (S21), the pressing part 11 may move toward the electrode assembly A. For example, a sealing apparatus 1 for sealing a corner of a separator S includes a moving part 12 and a pressing part 11, and the pressing part 11 may move by the moving part 12 so as to be in contact with the electrode assembly A.

In the sealing process (S22), the plurality of separators S may be sealed by pressing and heating the plurality of separators S in the state in which the pressing part 11 is in contact with the electrode assembly A. In this case, the pressing part 11 may include a pressing surface parallel to a cut corner of the electrode plate E. Specifically, the pressing surface to which the pressing part 11 applies a pressure and the cut surface of the corner of the electrode plate E, which faces the pressing surface, may be parallel to each other. More specifically, the pressing surface of the pressing part 11 may be angled at an angle of 25 degrees to 35 degrees with respect to the full-length direction and the full-width direction of the electrode assembly A. Similarly, the cut angle of the cut surface of the corner of the electrode plate E may be angled at an angle of 25 degrees to 35 degrees with respect to the full-length direction and the full-width direction of the electrode assembly A. That is, the angle of the pressing surface 11a may be designed differently according to the cut angle of the cut surface of the corner of the electrode plate E, and thus, the respective surfaces may be parallel to each other.

According to this structure, the pressure of the pressing part 11, which is applied to the electrode plate E during the sealing process, may be reduced to more prevent the electrode plate E from being bent and cracked.

In the moving process (S21) and/or the sealing process (S22), the pressing part 11 may move in the first direction parallel to the longitudinal direction of the electrode assembly A and the second direction parallel to the width direction of the electrode assembly A.

According to this operational principle, in the sealing apparatus 1 according to the related art, the pressing part 11 may operate only in the longitudinal direction of the electrode assembly A. On the other hand, in the method for sealing the electrode assembly according to an embodiment, the moving part 12 may allow the press part 11 to move in the longitudinal direction of the electrode assembly A and the direction perpendicular to the longitudinal direction to prevent the separator S of the electrode assembly A from being widened, or prevent the gap from occurring.

The above-disclosed subject matter is to be considered illustrative, and not restrictive, and the appended claims are intended to cover all such modifications, enhancements, and other embodiments, which fall within the true spirit and scope of the present disclosure.

Thus, the embodiment of the present invention is to be considered illustrative, and not restrictive, and the technical spirit of the present invention is not limited to the foregoing embodiment.

Therefore, the scope of the present disclosure is defined not by the detailed description of the invention but by the appended claims, and all differences within the scope will be construed as being included in the present disclosure.

### [Description of the Symbols]

1: Apparatus for sealing electrode assembly
11: Pressing part
12: Moving part
2: Method for sealing electrode assembly
21: Moving process
22: Sealing process
A: Electrode assembly
E: Electrode plate
S: Separator

## Claims

1. An apparatus for sealing an electrode assembly, which a plurality of separators are sealed to each other in the electrode assembly, in which a plurality of electrode plates and the plurality of separators are alternatively stacked, the apparatus comprising:
a pressing part configured to apply a pressure to the plurality of separators; and
a moving part configured to allow the pressing part to move toward the electrode assembly,
wherein the pressing part comprises a pressing surface that is parallel to a cut corner of each of the electrode plate.

2. The apparatus of claim 1, wherein the pressing surface is inclined to correspond to an inclined shape of the cut corner of the electrode plate.

3. The apparatus of claim 2, wherein the pressing surface of the pressing part is angled at an angle of 25 degrees to 35 degrees in a full-length direction of the electrode assembly.

4. The apparatus of claim 2, wherein the pressing surface of the pressing part is angled at an angle of 25 degrees to 35 degrees in a full-width direction of the electrode assembly.

5. The apparatus of claim 1, wherein the pressing part is provided in plurality to be respectively disposed at a plurality of corners of the electrode assembly.

6. The apparatus of claim 5, wherein the moving part allows the pressing part to move in a first direction parallel to a full-length direction of the electrode assembly and a second direction parallel to a full-width direction of the electrode assembly so as to press the plurality of separators.

7. The apparatus of claim 6, wherein the moving part allows the pressing part to sequentially move in the first and second directions.

8. A method for sealing an electrode assembly, which a plurality of separators are sealed to each other in the electrode assembly, in which a plurality of electrode plates and the plurality of separators are alternatively stacked, the method comprising:
a moving process of allowing a pressing part to move toward the electrode assembly; and
a sealing process of allowing the pressing part to press and heat the plurality of separators so as to seal the plurality of separators to each other in a state of being in contact with the electrode assembly,
wherein the pressing part comprises a pressing surface parallel to a cut corner of the electrode plate.

9. The method of claim 8, wherein the pressing surface is inclined to correspond to an inclined shape of the cut corner of the electrode plate.

10. The method of claim 9, wherein the pressing surface of the pressing part is angled at an angle of 25 degrees to 35 degrees in a full-length direction or full-width direction of the electrode assembly.

11. The method of claim 9, wherein the pressing part is provided in plurality to be respectively disposed at a plurality of corners of the electrode assembly.

12. The method of claim 9, wherein, in the moving process and/or sealing process, the pressing part moves in a first direction parallel to the full-length direction of the electrode assembly and a second direction parallel to the full-width direction of the electrode assembly.
